# EUROPÄISCHE PATENTSCHRIFT

(11) **EP 1 375 396 B1**
(45) Veröffentlichungstag und Bekanntmachung des Hinweises auf die Patenterteilung: **06.07.2005**
(21) Anmeldenummer: 02009740.8
(22) Anmeldetag: 30.04.2002
(51) Int. Cl.: B65G 57/03

(54) **Vorrichtung zum Abstapeln von Platten mit Zentrierung in unterer Ebene**
Device for stacking plates with aligning in a lower plane
Dispositif d'empilage des plaques avec l'alignement dans un plan inférieur

(43) Veröffentlichungstag der Anmeldung: 02.01.2004
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- DE-A- 3 412 183
- US-A- 4 770 406

## Beschreibung

Die vorliegende Erfindung bezieht sich auf eine Vorrichtung und ein Verfahren zum Abstapeln von Platten zu einem Stapel.

Bei der Herstellung und Verarbeitung von Platten werden zur Lagerung oder zum Transport oder aus anderen Gründen Stapel aus im wesentlichen vertikal übereinander liegenden Platten gebildet. Der Begriff "Abstapeln" bedeutet hier die Herstellung eines Stapels im Gegensatz zum "Entstapeln", bei dem die Platten von einem Stapel abgenommen werden. Die Erfindung bezieht sich dabei insbesondere auf beschichtete und unbeschichtete Span-, OSB-, MDF- und andere Faserplatten, Gipsplatten, Mineralplatten und ganz allgemein auf Platten aus Holz, Kunststoff, Metall und daraus zusammengesetzten Materialien.

Dazu müssen die Platten zu dem Stapel transportiert und dann auf dem Stapel abgelegt werden. Dies kann in einzelnen Lagen oder auch für eine kleinere Zahl bereits übereinander liegender Platten jeweils gemeinsam erfolgen. Die Stapel können aus einzelnen, lageweise übereinander liegenden Platten oder auch in einer Lage aus einer Mehrzahl von Platten bestehen, die zu einem sog Stapelbild zusammengefügt sind.

Grundsätzlich ist man in der Regel bemüht, die Platten in dem Stapel in bezüglich der Ebene der Lagen definierten Positionen aufeinander abzustapeln und/oder, wenn der Vorgang des Ablegens an sich nicht der gewünschten Präzision der Positionierung entspricht, in dem Stapel auszurichten.

Es ist bekannt und üblich, dazu Ausrichteeinrichtungen zu verwenden, die die Platten in dem Stapel entweder insgesamt oder nur in einem Teilbereich der Höhe des Stapels (beispielsweise nur die obersten Lagen) mit einem Ausrichteschieber seitlich verschieben und dadurch infolge der Anlage an dem Ausrichteschieber ausrichten. In der Regel verwendet man dabei an der entgegengesetzten Kante der Platten einen Anschlag als Widerlager, so dass die Ausrichtung sowohl aus der Anlage an dem Ausrichteschieber als auch aus der Anlage an dem Widerlager folgt. Dabei werden die Platten konventionellerweise unmittelbar nach dem Ablagevorgang ausgerichtet

Die DE 34 12 183 A1 zeigt eine Vorrichtung gemäß dem Oberbegriff des Anspruchs 1. Der Ausrichteschieber ist dabei auf der Höhe der bei einem aktuellen Ablegevorgang auf dem Stapel abgelegten Platten, in diesem Fall Papierbögen, angeordnet.

Ferner zeigt die US 4 779 406 eine Abstapelvorrichtung mit seitlichen Führungsplatten, die jedoch vertikal nach oben bewegt werden können, um einem in Einlaufrichtung der abzustapelnden Papierbögen arbeitenden Anschlag auszuweichen.

Der Erfindung liegt das technische Problem zugrunde, eine verbesserte Vorrichtung und ein verbessertes Verfahren zum Abstapeln von Platten zu einem Stapel anzugeben, wobei die Platten effizient abgestapelt und ausgerichtet werden sollen.

Die Erfindung richtet sich zum einen auf eine Vorrichtung zum Abstapeln von Platten zu einem Stapel mit einer Transporteinrichtung zum Transportieren der Platten zu dem Stapel und Ablegen der Platten auf dem Stapel aus einer ersten seitlichen Richtung und einer Ausrichteeinrichtung zum Ausrichten in dem Stapel liegender Platten, die einen Ausrichteschieber aufweist und dazu ausgelegt ist, den Ausrichteschieber aus einer zu der ersten seitlichen Richtung quer verlaufenden zweiten seitlichen Richtung gegen die auszurichtenden Platten zu drücken und diese zu verschieben und dadurch auszurichten, dadurch gekennzeichnet, dass die Abstapelvorrichtung so aufgebaut ist, dass der Ausrichteschieber in Stapelrichtung unter einer bei einem aktuellen Ablegevorgang auf dem Stapel abgelegten Platte angeordnet ist,
und außerdem auf ein Verfahren zum Abstapeln von Platten zu einem Stapel mithilfe der obigen Vorrichtung und den Verfahrensschritten: Transportieren der Platten zu dem Stapel und Ablegen der Platten auf dem Stapel aus einer ersten seitlichen Richtung, Ausrichten in dem Stapel aufeinander liegender Platten durch Drücken eines Ausrichteschiebers gegen die auszurichtenden Platten aus einer zu der ersten seitlichen Richtung quer verlaufenden zweiten seitlichen Richtung und Verschieben und dadurch Ausrichten der Platten, wobei der Ausrichteschieber in Stapelrichtung unter einer bei einem aktuellen Ablegevorgang auf dem Stapel abgelegten Platte angeordnet ist.

Die Grundidee der Erfindung liegt darin, zumindest für einen Ausrichteschieber, der in einer zu der Richtung, in der die Platten auf dem Stapel abgelegt werden, quer verlaufenden Richtung wirkt, eine Position unterhalb des Niveaus vorzusehen, auf dem die Platten abgelegt werden. Damit soll erreicht werden, dass der Ausrichteschieber den Vorgang des Ablegens der Platten nicht stört. Insbesondere sollen die Platten auf der Stapeloberseite abgelegt werden können, auch wenn der Ausrichteschieber gleichzeitig darunter liegende Platten zum Ausrichten seitlich verschiebt oder dieser Vorgang noch nicht ganz abgeschlossen ist.

Die sog. erste seitliche Richtung soll also die Richtung bezeichnen, in der die Platten auf dem Stapel abgelegt werden. Es wird also davon ausgegangen, dass die Platten nicht genau senkrecht von oben auf den Stapel gelegt werden, sondern von einer Seite kommen. Anders ausgedrückt hat die Bewegung der Platten bei dem Ablegen auf dem Stapel eine Komponente in der der Flächigkeit der Platten entsprechenden Ebene. Diese Bewegung muss natürlich nicht parallel zu dieser Ebene erfolgen, sondern hat im allgemeinen auch zu der Ebene senkrechte Komponenten. Üblicherweise werden die Platten also von einer Seite aus auf den Stapel transportiert und dort abgelegt, wobei die dabei auftretende Richtungskomponente in der erwähnten Ebene der Flächigkeit der Platten als erste seitliche Richtung bezeichnet wird.

Die zweite seitliche Richtung ist daher eine andere Richtung in der Ebene der Flächigkeit der Platten. Sie soll zu der ersten seitlichen Richtung quer liegen, also ungefähr senkrecht dazu, wobei es auf den genauen Winkel nicht eigentlich ankommt. Im einzelnen kommt es hier vor allem auf die Geometrie der Platten an.

Der erwähnte Ausrichteschieber gehört zu einer in der zweiten seitlichen Richtung wirkenden Ausrichteeinrichtung. In aller Regel weist diese Ausrichteeinrichtung ferner einen Anschlag auf. Dies ist jedoch nicht unbedingt notwendig, weil bereits durch die Anlage an dem Ausrichteschieber während der seitlichen Verschiebung in der zweiten Richtung eine Ausrichtung erreicht werden kann.

Wenn nun die Platten von der Transporteinrichtung in der ersten Richtung auf dem Stapel abgelegt werden, so muss konventionellerweise dafür gesorgt werden, dass der Ausrichteschieber für die dazu quer liegende zweite Richtung den Vorgang des Ausrichtens abgeschlossen hat und sich ausreichend weit zurückgezogen hat. Sonst besteht die Gefahr, dass eine neu einlaufende Platte mit dem Ausrichteschieber kollidiert.

Die Erfindung geht nun davon aus, dass das Arbeitstempo der Gesamtvorrichtung erheblich erhöht werden kann, wenn man den Ausrichteschieber im Sinne der Stapelrichtung, also der auf der Ebene der Flächigkeit der Platten senkrechten Richtung, etwas tiefer anordnet. Dadurch kann eine neu einlaufende Platte nicht mehr mit dem Ausrichteschieber kollidieren, weil er, wenn er gegenüber der Sollposition der Ausrichtung entsprechend versetzt einläuft, über ihn hinweg transportiert wird.

Daraus folgt, dass die Anordnung des Ausrichteschiebers unter dem oder den Platten eines aktuellen Ablegevorgangs auf die Positionen des Ausrichteschiebers bezogen ist, die in der Nähe der entsprechenden Kanten der Platten bzw. Seitenfläche des Stapels liegen. Der Ausrichteschieber kann also im Prinzip in einer zurück gefahrenen Position durchaus höher liegen, wenn dies aus bestimmten Gründen sinnvoll sein soll. Auch können Teile des Ausrichteschiebers oder der übrigen Ausrichteeinrichtung, die ohnehin nicht in die Nähe des Stapels gelangen, entsprechend höher angeordnet sein. Die erfindungsgemäße abgesenkte Anordnung bezieht sich also nur auf den Bereich der Ausrichteeinrichtung bzw. des Ausrichteschiebers, der mit Rücksicht auf die Positionsvariationen der Platten beim Ablegen auf dem Stapel im Gefahrenbereich einer Kollision mit den Platten liegt. Insbesondere kann dies die für den Kontakt mit den Platten ausgelegte vordere Platte einer angetriebenen Stange eines elektrischen Antriebs oder eines Zylinderkolbens einer pneumatischen oder hydraulischen Ausrichteeinrichtung sein.

Es wird daran erinnert, dass die Platten einzeln oder in einer Mehrzahl gemeinsam abgelegt werden können, weswegen die vorstehende Erläuterung auf den aktuellen Ablegevorgang und nicht auf die oberste Platte bezogen ist.

Bei einer bevorzugten Ausgestaltung der Erfindung laufen die Platten gegenüber der Sollposition des Ausrichtens in der zweiten seitlichen Richtung etwas versetzt ein, und zwar in Richtung zum Ausrichteschieber versetzt. Die Beseitigung der Kollisionsgefahr kann also dazu ausgenutzt werden, mit der Transporteinrichtung die Platten bewusst in der zweiten Richtung zu dem Ausrichteschieber versetzt abzulegen. Da insbesondere bei sehr schnell ablaufenden Ablagevorgängen häufig keine genaue Positionierung auf dem Stapel erreicht wird, ist mit diesem seitlichen Versatz im Zweifel der Mittelwert oder Sollwert beim Ablegen gemeint. Damit wird dem Ausrichteschieber für den Fall, dass kein Widerlager vorhanden ist, ein für das Ausrichten notwendiger Verschiebeweg zur Verfügung gestellt. Wenn ein Widerlager vorgesehen ist, so werden die Platten in der zweiten Richtung von dem Widerlager etwas entfernt abgelegt. Daher kann der Anschlag ohne Rücksicht auf Kollisionen mit einlaufenden Platten angeordnet werden, und zwar insbesondere auch dann, wenn er in der zweiten Richtung unbeweglich ist. Damit vereinfacht sich die Konstruktion dieses Anschlages erheblich. Andererseits ist es natürlich auch möglich, auf beiden Seiten des Stapels mit einer abgesenkten Anordnung der Ausrichteeinrichtung zu arbeiten und/oder beiderseits einen in der zweiten Richtung beweglichen Ausrichteschieber vorzusehen. Eine typische Größenordnung für den Versatz liegt bei 5 - 200 mm, vorzugsweise 20 - 150 mm.

Weiterhin kann der Anschlag in der Stapelrichtung beweglich sein, beispielsweise um eine Achse schwenkbar sein, um einem den Stapel tragenden Boden auszuweichen, wenn dieser zur Aufnahme eines neuen Stapels nach oben bewegt wird. Wenn nämlich ein fertiger Stapel entnommen worden ist und ein neuer Stapel begonnen werden soll, so erfolgen die ersten Ablagevorgänge auf diesem Boden selbst oder unmittelbar darüber, so dass der Boden in der Regel eine relativ hohe Position einnehmen soll. Zu diesem Zweck ist er vertikal verstellbar ausgeführt. Da der Anschlag erfindungsgemäß in der zweiten Richtung fest angebracht sein kann, kann er nicht, wie der in der zweiten Richtung bewegliche Ausrichteschieber, zurück gezogen werden, um dem Boden Platz zu schaffen. Der Ausrichteschieber wiederum kann so lange zurück gezogen bleiben, bis der Boden tief genug liegt, der neu angefangene Stapel also eine gewisse Höhe erreicht hat. Dann kann der erste Ausrichtevorgang mit diesem begonnenen Stapel durchgeführt werden.

Der Ausrichteschieber wiederum hat gemäß einer Ausgestaltung der Erfindung ein vertikal gefedertes Vorderteil, d.h. dem Stapel zugewandtes Teil. Damit kann erreicht werden, dass wenn eine Platte so weit in der zweiten Richtung zu der Seite des Ausrichteschiebers versetzt abgelegt worden ist, dass sie auf dem Vorderteil des Schiebers hängen bleibt, wenn der Stapel für den nächsten Ablegevorgang abgesenkt wird, und/oder wenn der Ausrichteschieber so knapp unter dem Höhenniveau der aktuellen Ablagevorgänge angeordnet ist, dass eine Platte beim Absenken des Stapels und gleichzeitigem Zurückziehen des Ausrichteschiebers auf letzterem hängen bleiben könnte, das entsprechende Vorderteil nachgibt. Die entsprechende Platte wird also nicht von dem Stapel abgehoben. Vielmehr wird der Ausrichteschieber infolge seiner vertikalen Nachgiebigkeit in seinem vorderen Bereich unter dieser Platte entlang zurück gezogen.

Ferner kann das Vorderteil des Ausrichteschiebers an seiner Oberkante eine oder mehrere Rollen aufweisen, über die eine Platte in einer solchen Situation abrollen könnte. Dies kann zusätzlich zu der beschriebenen vertikalen Federung oder alternativ dazu erfolgen.

Die Bewegung des Ausrichteschiebers erfolgt vorzugsweise mit einer Antriebseinheit in Form eines durch zumindest ein paralleles Stabilisierungslager unterstützten Pneumatikantrieb.

Die Erfindung wird vorzugsweise eingesetzt bei einer Einzellagenabstapelung, bei der also eine Stapellage nach der anderen abgestapelt wird. Dabei liegen in dem Stapel in jeder Stapellage vorzugsweise nur jeweils eine Platte oder zumindest ein sehr einfaches Stapelbild aus Platten, etwa zwei nebeneinander liegende Platten. Gerade bei solchen Abstapelvorrichtungen und -verfahren, bei denen einzelne Platten oder einfache Stapelbilder einzellagenweise in sehr hoher Geschwindigkeit abgelegt werden, hat die Erfindung besondere Vorteile.

Demgegenüber kann der Ausrichtevorgang für mehrere Lagen gemeinsam erfolgen, also bei einer Einzellagenabstapelung mit einem kleineren Takt als das Ablegen.

Schließlich bezieht sich die Erfindung auch auf eine in der ersten Richtung wirkende Ausrichteeinrichtung, die hier als zweite Ausrichteeinrichtung mit einem entsprechenden zweiten Ausrichteschieber bezeichnet wird. Vorzugsweise ist dieser zweite Ausrichteschieber im Gegensatz zu dem ersten Ausrichteschieber auf dem Höhenniveau der zum Ablegen einlaufenden Platten angeordnet, d.h. zumindest zu einem Teil seiner vertikalen Erstreckung dort angeordnet. Demzufolge kann dieser Schieber nicht nur zum Ausrichten in der an sich bereits beschriebenen Form dienen, sondern zudem die Funktion eines Puffers für die einlaufenden Platten erfüllen. Dazu ist er im Sinne der Bewegung beim Ablegen der Platten hinter dem Stapel angeordnet, so dass über den Stapel hinaus rutschende Platten elastisch aufgefangen werden können. An der entsprechend entgegengesetzten Seite des Stapels, d.h. im Sinne der Bewegung der einlaufenden Platten vor dem Stapel, kann ein entsprechender weiterer Anschlag vorgesehen sein. Insbesondere kann dieser unter einer zwischen dem Stapel und der Transporteinrichtung liegenden Einlaufkante vorgesehen sein, wie das Ausführungsbeispiel zeigt.

Im folgenden wird ein Ausführungsbeispiel der Erfindung im einzelnen beschrieben. Dabei offenbarte Merkmale können auch einzeln oder in anderen als den dargestellten Kombinationen erfindungswesentlich sein. Insbesondere wird darauf hingewiesen, dass die vorstehende und die nachfolgende Beschreibung sich sowohl auf den Vorrichtungscharakter als auch auf den Verfahrenscharakter der Erfindung beziehen und sämtliche Merkmale beider Aspekte aufweisen.
Figur 1 zeigt eine schematisierte Seitenansicht einer erfindungsgemäßen Vorrichtung.
Figur 2 zeigt eine schematisierte Schnittansicht der Vorrichtung aus Figur 1 in dazu senkrechter Blickrichtung.
Figur 3 zeigt Details der Vorrichtung aus den Figuren 1 und 2 in verschiedenen Teilansichten.

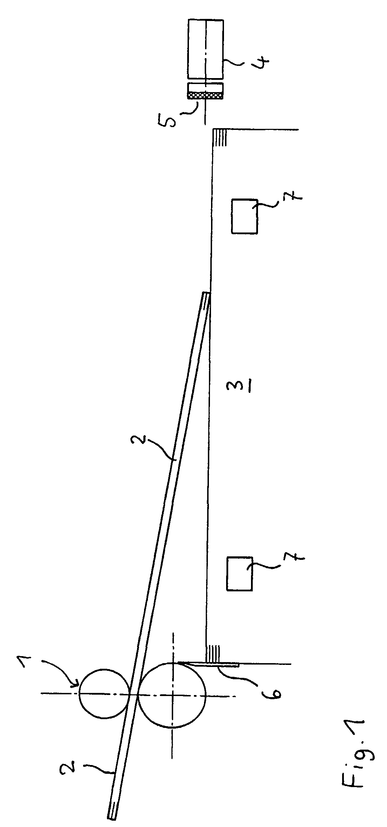

In Figur 1 ist im linken Bereich ein aus zwei übereinanderliegenden Rollen dargestelltes Rollenpaar bzw. sogenanntes Rollenwerk 1 dargestellt, das von einer nicht dargestellten Rollentransportbahn angelieferte Holzwerkstoffplatten 2 greift und durch einen Transportspalt zwischen den Rollen auf eine in der Figur 1 rechts von dem Rollenwerk 1 und unter dem Niveau des Spalts angeordnete Oberseite eines Plattenstapels 3 legt. In dieser Darstellung entspricht die erste seitliche Richtung der Horizontalen in der Figur, die zweite seitliche Richtung der Senkrechten auf der Zeichenebene und die Stapelrichtung der Vertikalen in der Figur.

In der Transportrichtung der Platten 2, also der ersten Richtung, hinter dem Stapel 3 sind zwei in nicht näher dargestellter Weise montierte Zylinder 4 einer Ausrichteeinrichtung vorgesehen, an denen jeweils an der dem Stapel 3 zugewandten Seite ein Zylinderkolben mit einer Frontplatte verschieblich gehalten ist, der einen Ausrichteschieber 5 bildet. Die Zylinder 4 können die Ausrichteschieber 5 bis zu dem Stapel 3 vorfahren und im Übrigen als elastische Puffer für die in der dargestellten Weise von dem Rollenwerk 1 abgelegten Platten 2 halten. Wenn diese über die dem Ausrichteschieber 5 benachbarte Oberkante des Stapels 3 hinausschießen, stoßen sie an die elastisch nachgebenden Ausrichteschieber 5 an und können im Übrigen von diesen durch eine Ausfahrbewegung der Zylinder 4 ausrichtend zurückgeschoben werden, bis sie an einem an der entgegengesetzten oberen Kante des Stapels 3 angebrachten Anschlag 6 zur Anlage kommen. Es handelt sich hier um die im Sinn der vorstehenden Beschreibung zweite Ausrichteeinnchtung mit zweiten Ausrichteschiebern 5 und dem zweiten Anschlag 6.

Ferner ist in der Figur 1 angedeutet, dass sich in der zweiten Richtung neben dem Stapel 3 und unterhalb dessen Oberkante, also im Sinne der Perspektive der Figur 1 vor dem Stapel 3, zwei erste Ausrichteschieber 7 befinden. Auch diese sind in nicht näher dargestellter Weise montiert und durch einen Zylinder verfahrbar. Sie dienen zum Ausrichten des Stapels 3 in der zweiten Richtung.

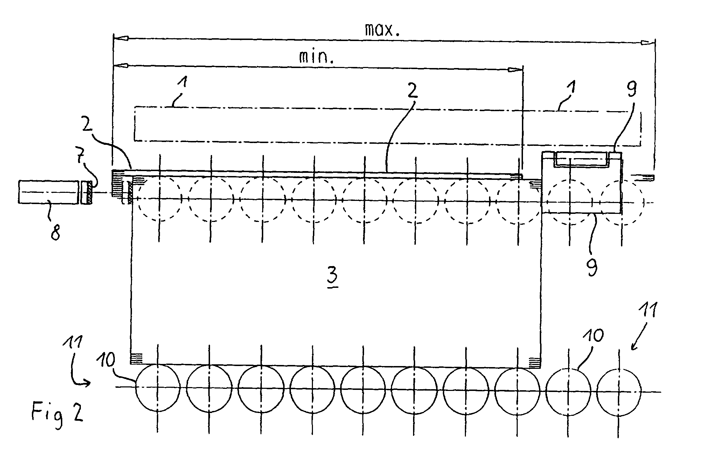

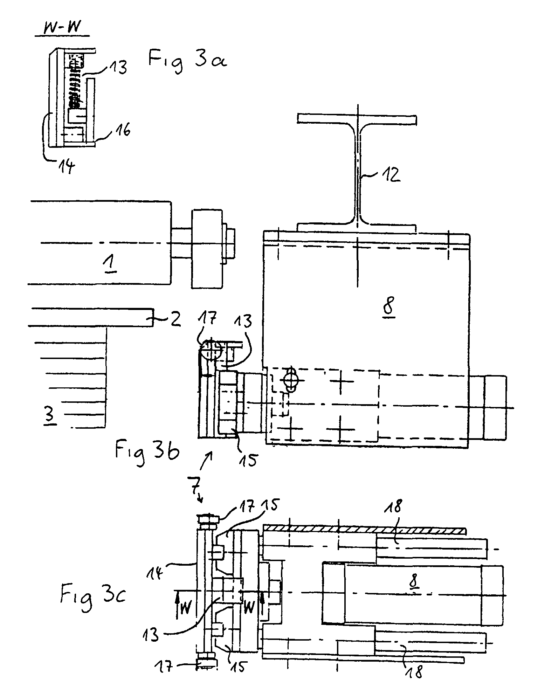

Figur 2 verdeutlicht dies. Die Perspektive der Figur 2 entspricht der ersten seitlichen Richtung, die zweite Richtung liegt also horizontal in der Zeichenebene. Oberhalb des mittig in der Figur dargestellten Stapels 3 erkennt man in unterbrochener Linie als flaches breites Rechteck dargestellt die untere Rolle des Rollenpaares 1 aus Figur 1. Diese Rolle liegt in der Perspektive der Figur 2 also hinter dem Stapel 3. Folglich liegen die Ausrichteschieber 7 in Figur 2 links von dem Stapel 3, wobei ferner ein zugehöriger Zylinder 8 eingezeichnet ist. Zu den weiteren baulichen Einzelheiten der ersten Ausrichteschieber 7 mit dem Zylinder 8 wird auf die Darstellungen in Figur 3 verwiesen. Figur 2 zeigt den Ausrichteschieber 7 links an dem Zylinder 8 in einer zurückgefahrenen Position und darüber hinaus ein zweites Mal weiter rechts in Anlage an der benachbarten Seitenfläche des Stapels 3.

Auf der entgegengesetzten Seite des Stapels 3, also in Figur 2 rechts, erkennt man einen mit dem Ausrichteschieber 7 zusammenwirkenden Anschlag 9, der an seinem oberen Ende um eine in der zweiten Richtung verlaufende Drehachse schwenkbar gelagert ist.

Wenn die in Figur 2 oberste und dort mit 2 bezeichnete Platte von dem Rollenpaar 1 auf den Stapel 3 abgelegt worden ist, liegt sie auslegungsgemäß in der gezeichneten Weise etwas nach links (siehe in der Figur) gegenüber dem Stapel 3 versetzt. Es können nun einige der Platten 2 in dieser Weise abgelegt werden. Nach einer bestimmten Zahl von Ablagevorgängen fährt der Ausrichteschieber 7 aus und drückt die von ihm erfassten Platten in dem Stapel 3 nach rechts bis zu einer Anlage an dem Anschlag 9. Dadurch werden diese Platten zwischen dem Ausrichteschieber 7 und dem Anschlag 9 ausgerichtet, wodurch sich die vertikalen Seitenflächen des Stapels 3 ergeben. Man erkennt deutlich, dass zwar der Anschlag 9 auch das Niveau der einlaufenden Platten 2 erfasst, nicht jedoch der Ausrichteschieber 7. Vielmehr verschiebt er zwar Platten im oberen Bereich des Stapels 3, jedoch nicht die oder einige oberste Platten. Letztere können bei dem Verschieben infolge der Haftreibung mitgenommen werden, werden jedoch nicht im eigentlichen Sinn ausgerichtet. Dies erfolgt erst dann, wenn sie durch Absenken des Stapels 3 auf das entsprechende Niveau herabgelangt sind, auf dem sie von dem Ausrichteschieber 7 erfasst werden können. Der Arbeitstakt des Ausrichteschiebers 7 muss damit auf den Ablegetakt einerseits und auf die Zahl der infolge seiner vertikalen Erstreckung erfassbaren Platten abgestimmt sein.

Daraus ergibt sich aber auch, dass die von dem Rollenpaar 1 auf den Stapel mit großer Geschwindigkeit und etwas ungenauer Position auch in der zweiten Richtung abgeworfenen Platten 2 problemlos abgelegt werden können, ohne auf die momentane Arbeitsposition des Ausrichteschiebers 7 Rücksicht zu nehmen. Diese arbeitet also völlig unabhängig von dem Ablegevorgang. Der Versatz zur in Figur 2 linken Seite sorgt außerdem dafür, dass die abgeworfenen Platten 2 nicht mit dem Anschlag 9 kollidieren können.

Der Arbeitstakt der zweiten Ausrichteschieber 5 aus Figur 1 kann im Übrigen vorzugsweise mit dem Arbeitstakt des ersten Ausrichteschiebers 7 zusammenfallen, so dass sich die Ausrichtevorgänge nicht gegenseitig stören. In den beiden Richtungen kann jedoch auch völlig unabhängig voneinander oder zumindest in abweichenden Takten ausgerichtet werden.

Vertikale Bewegungen des Stapels 3 erfolgen über einen mit symbolisch dargestellten Rollen 10 versehenen Boden 11 der Abstapelvorrichtung, auf dem der Stapel 3 aufgebaut wird. In gestrichelten Linien ist unmittelbar unter der obersten Platte 2 dargestellt, dass dieser Boden 11 bis zu diesem Niveau hochgefahren werden kann, wenn ein neuer Stapel 3 begonnen wird. Dabei kann der Anschlag 9 durch ein Verschwenken um die in der Figur 2 an seinem oberen Ende dargestellte Schwenkachse nach oben ausweichen. Seine Funktion erfüllt er dann, wenn der Boden 11 unter das von dem Ausrichteschieber 5 erfasste Niveau abgesenkt worden ist, so dass dieser mit dem ersten Ausrichtevorgang beginnen kann.

Die Rollen 10 des Bodens 11 dienen dazu, einen fertigen Stapel 3 in der zweiten Richtung, also in Figur 2 horizontal in der Zeichenebene, seitlich ausfahren zu können. Dazu wird der Boden 11 soweit abgesenkt, dass der Stapel 3 unter dem Zylinder 8 mit dem Ausrichteschieber 7 oder unter dem Anschlag 9 hindurch passt.

Figur 2 verdeutlicht ferner, dass der Anschlag 9 in der zweiten Richtung, in Figur 2 also nach rechts, verstellbar ist, um Platten mit größerer Breite in der zweiten Richtung abstapeln zu können. Das für diese Vorrichtung vorgesehene kleinste Plattenformat ist in Figur 2 gezeichnet und mit "min." bezeichnet. Das größte Plattenformat ist andererseits im rechten Bereich rechts von dem Anschlag 9 angedeutet und mit "max." bezeichnet. An Aufbau und Funktion der übrigen Teile ändert sich dabei nichts.

Figur 3 zeigt einige technische Einzelheiten zu dem Aufbau des Zylinders 8 der ersten Ausrichteeinrichtung mit dem Ausrichteschieber 7. Der mittlere Bereich 3b der Figur 3 zeigt in einer in der Perspektive zu Figur 2 entgegengesetzten Darstellung rechts den an einem Träger 12 montierten Zylinder 8, der den Ausrichteschieber 7 pneumatisch ausfahren kann. Links versetzt davon ist der Stapel 3 eingezeichnet, dessen oberste Platte mit 2 bezeichnet ist. Darüber ist zur Veranschaulichung die untere Rolle des Rollenpaares 1 eingezeichnet.

Der Ausrichteschieber 7 weist eine in der links oben dargestellten Schnittansicht 3a erkennbare vertikale Federung 13 auf, an der ein Frontplattenbereich 14 aufgehängt ist. Dieser Frontplattenbereich ist durch in der mittleren Darstellung erkennbare Linearführungen 15 geführt, so dass der Frontplattenbereich 14 federnd aus der gezeichneten Position nach unten nachgeben kann. Dabei trennt sich der Frontplattenbereich 14 an der mit 16 bezeichneten Stelle von dem vertikal festen Teil des Ausrichteschiebers 7, womit ein Anschlag zur Festlegung der obersten Position des Plattenbereichs 14 gegeben ist.

Ferner weist der Frontplattenbereich an seiner Oberkante Rollen 17 auf, die einerseits in dem mittleren Bereich 3b und andererseits im unteren, einer Draufsicht entsprechenden Bereich 3c zu sehen sind. Figur 3a entspricht dem in Figur 3c angegebenen Schnitt W-W.

Man erkennt, dass wenn es zu einer Kollision zwischen einer oberen Platte 2 und dem Ausrichteschieber 7 beim Zurückziehen kommen sollte, diese Platte 2 einerseits über die Rollen 17 ohne Beschädigung abrollen kann und zum zweiten der in Frage kommende vordere und obere Bereich 14 des Ausrichteschiebers vertikal nach unten nachgeben kann. Damit wird zusätzlich zu der auch in Figur 3b erkennbaren erfindungsgemäßen Anordnung des Ausrichteschiebers 7 unterhalb des Niveaus der obersten Platte 2 eine weitere Vorkehrung getroffen, um einen möglichst schnellen Betrieb der Gesamtvorrichtung zu gewährleisten und die Betriebsweise der Ausrichteeinrichtung mit dem Ausrichteschieber 7 unabhängig von dem Ablegen der Platten 2 auf dem Stapel 3 zu gewährleisten.

Figur 3c zeigt ferner, dass der Zylinder 8 zwei Stabilisierungslinearführungen 18 für den Pneumatikzylinder 8 aufweist.

## Patentansprüche

1. Vorrichtung zum Abstapeln von Platten (2) zu einem Stapel (3) mit:
einer Transporteinrichtung (1) zum Transportieren der Platten (2) zu dem Stapel (3) und Ablegen der Platten (2) auf dem Stapel (3) aus einer ersten seitlichen Richtung
und einer Ausrichteeinrichtung (7 - 9) zum Ausrichten in dem Stapel (3) liegender Platten (2),
die einen Ausrichteschieber (7) aufweist und dazu ausgelegt ist, den Ausrichteschieber (7) aus einer zu der ersten seitlichen Richtung quer verlaufenden zweiten seitlichen Richtung gegen die auszurichtenden Platten zu drücken und diese zu verschieben und dadurch auszurichten,
**dadurch gekennzeichnet, dass** die Abstapelvorrichtung so aufgebaut ist, dass der Ausrichteschieber (7) in Stapelrichtung unter einer bei einem aktuellen Ablegevorgang auf dem Stapel abgelegten Platte (2) angeordnet ist.

2. Vorrichtung nach Anspruch 1, bei der die Transporteinrichtung (1) dazu ausgelegt ist, die Platten (2) so auf dem Stapel (3) abzulegen, dass sie gegenüber ihrer ausgerichteten Position in der zweiten seitlichen Richtung etwas versetzt sind, so dass der Ausrichteschieber (7) die Platten (2) bei dem Ausrichten aus der versetzten Position in der zweiten seitlichen Richtung in die ausgerichtete Position verschieben kann.

3. Vorrichtung nach Anspruch 2, bei der die Ausrichteeinrichtung (7 - 9) einen in der Nähe einer zu der von dem Ausrichteschieber (7) erfassten Kante der Platten in dem Stapel (3) entgegengesetzten Kante angeordneten Anschlag (9) aufweist.

4. Vorrichtung nach Anspruch 3, bei der der Anschlag (9) vertikal beweglich ist, um einem zum Aufnehmen des Stapel dienenden Boden (10) der Vorrichtung ausweichen zu können, wenn dieser Boden (10) zur Herstellung eines neuen Stapels (3) nach oben bewegt wird.

5. Vorrichtung nach einem der vorstehenden Ansprüche, bei der der Ausrichteschieber (7) eine vertikal wirkende Federung (13) aufweist.

6. Vorrichtung nach einem der vorstehenden Ansprüche, bei der der Ausrichteschieber (7) an einer dem Stapel (3) zugewandten Oberkante eine Rolle (17) aufweist.

7. Vorrichtung nach einem der vorstehenden Ansprüche, bei der der Ausrichteschieber (7) durch einen Pneumatikzylinder (8) mit einem zusätzlichen Stabilisierungslager (18) in der zweiten seitlichen Richtung antreibbar ist.

8. Vorrichtung nach einem der vorstehenden Ansprüche, die dazu ausgelegt ist, die Platten (2) in einzelnen Lagen abzustapeln.

9. Vorrichtung nach einem der vorstehenden Ansprüche, bei der die Ausrichteeinrichtung (7 - 9) dazu ausgelegt ist, mehrere Lagen in dem Stapel (3) gemeinsam auszurichten.

10. Vorrichtung nach einem der vorstehenden Ansprüche, mit einer zweiten Ausrichteeinrichtung (4 - 6) zum Ausrichten in dem Stapel (3) aufeinander liegender Platten (2), die einen zweiten Ausrichteschieber (5) aufweist, der dazu ausgelegt ist, aus der ersten seitlichen Richtung gegen die auszurichtenden Platten (2) zu drücken und diese zu verschieben und dadurch auszurichten, und der in der zu den Platten senkrechten Richtung auch in der Höhe einer bei einem aktuellen Ablegevorgang auf dem Stapel abgelegten Platte (2) angeordnet ist und der ferner als elastischer Puffer für von der Transporteinrichtung (1) auf dem Stapel (3) abgelegte Platten (2) dienen kann.

11. Verfahren zum Abstapeln von Platten (2) zu einem Stapel (3) mit Hilfe der obigen Vorrichtung und den Verfahrensschritten:
Transportieren der Platten (2) zu dem Stapel (3) und Ablegen der Platten (2) auf dem Stapel (3) aus einer ersten seitlichen Richtung,
Ausrichten in dem Stapel (3) aufeinander liegender Platten durch Drücken eines Ausrichteschiebers (7) gegen die auszurichtenden Platten aus einer zu der ersten seitlichen Richtung quer verlaufenden zweiten seitlichen Richtung und Verschieben und dadurch Ausrichten der Platten, wobei der Ausrichteschieber (7) in Stapelrichtung unter einer bei einem aktuellen Ablegevorgang auf dem Stapel abgelegten Platte (2) angeordnet ist.

## Claims

1. An apparatus for stacking panels (2) into a stack (3) including:
a feeder (1) for feeding said panels (2) to said stack (3) and placing said panels (2) on said stack (3) from a first lateral direction and an alignment means (7-9) for aligning panels (2) located in said stack (3)
comprising an alignment pusher (7) and designed to urge said alignment pusher (7) from a second lateral direction oriented transversely to said first lateral direction against said panels (2) to be aligned to thus shift and align said panels (2)
**characterised in that** said stacking apparatus is configured so that said alignment pusher (7) is arranged below a panel (2) presently placed on said stack, with regard to a direction of said stacking.

2. The apparatus as set forth in claim 1 wherein said feeder (1) is designed to place said panels (2) on said stack (3) so that they are slightly displaced relative to their aligned position in said second lateral direction in enabling said alignment pusher (7) to shift said panels (2) into said alignment position in alignment from said displaced position in said second lateral direction.

3. The apparatus as set forth in claim 2 wherein said alignment means (7-9) comprises a stop (9) arranged in the vicinity of an edge opposite to an edge of said panels (2) in said stack (3) as contacted by said alignment pusher (7).

4. The apparatus as set forth in claim 3 wherein said stop (9) is movable vertically to make way for a platform (10) of said apparatus serving to receive said stack (3) when said platform (10) is moved upwards in producing a new stack (3).

5. The apparatus as set forth in any of the preceding claims wherein said alignment pusher (7) comprises a vertically acting spring mount (13).

6. The apparatus as set forth in any of the preceding claims wherein said alignment pusher (7) comprises a roller (17) at an upper edge facing said stack (3).

7. The apparatus as set forth in any of the preceding claims wherein said alignment pusher (7) can be powered by a pneumatic cylinder (8) including an additional stabilizing mount (18) in said second lateral direction.

8. The apparatus as set forth in any of the preceding claims wherein said apparatus is designed to stack panels (2) layer-by-layer.

9. The apparatus as set forth in any of the preceding claims wherein said alignment means (7-9) is designed to align several layers in said stack (3) in common.

10. The apparatus as set forth in any of the preceding claims wherein a second alignment means (4-6) is provided for aligning panels (2) located one on the other in said stack (3), comprising a second alignment pusher (5) designed to urge from said first lateral direction against said panels (2) to be aligned, to shift and thus to align them and which is arranged in the direction perpendicular to said panels (2) also level with a panel (2) presently placed on said stack and which furthermore may serve as an elastic buffer for panels (2) placed by said feeder (1) on said stack (3).

11. A method for stacking panels (2) into a stack (3) with the aid of said apparatus as claimed above and comprising the steps: feeding said panels (2) to said stack (3) and placing said panels (2) on said stack (3) from a first lateral direction,
aligning said panels located one on the other in said stack (3) by urging an alignment pusher (7) from a second lateral direction oriented transversely to said first lateral direction against said panels (2) to be aligned, to thus shift and align said panels (2), wherein said alignment pusher (7) is arranged below a panel (2) presently placed on said stack (3), with regard to a direction of said stacking.

## Revendications

1. Dispositif pour l'empilage de panneaux (2) en une pile (3) avec :
une installation de transport (1) pour transporter les panneaux (2) à la pile (3) et déposer les panneaux (2) sur la pile (3) à partir d'une première direction latérale
et d'un mécanisme de positionnement (7 - 9) pour positionner les panneaux (2) à plat sur la pile (3),
qui comporte un mécanisme de positionnement par poussée (7), lequel est conçu pour pousser les panneaux à positionner à partir d'une deuxième direction latérale, perpendiculaire à la première, afin de les déplacer à des fins de positionnement,
**caractérisé en ce** sens que le dispositif d'empilage est conçu de façon que le mécanisme de positionnement par poussée (7) soit disposé dans le sens de la pile sous un panneau (2) en cours de dépose sur la pile.

2. Dispositif selon la revendication 1, sur lequel l'installation de transport (1) est conçue pour déposer les panneaux (2) sur la pile (3) de façon qu'ils soient légèrement décalés dans la deuxième direction latérale par rapport au positionnement prévu, ce qui permet au mécanisme de positionnement par poussée (7) de déplacer les panneaux (2) de leur position décalée dans la deuxième direction latérale en position finale de positionnement.

3. Dispositif selon la revendication 2, sur lequel le mécanisme de positionnement (7 - 9) comporte une butée (9), disposée à proximité du chant opposé au chant des panneaux de la pile (3) au contact du mécanisme de positionnement par poussée (7).

4. Dispositif selon la revendication 3, sur lequel la butée (9) est mobile dans le sens vertical pour pouvoir s'écarter d'une base (10), servant à supporter la pile et faisant partie du dispositif, lorsque ladite base (10) est déplacée vers le haut pour la réalisation d'une nouvelle pile (3).

5. Dispositif selon une des revendications précédentes, sur lequel le mécanisme de positionnement par poussée (7) comporte une suspension (13) agissant dans le sens vertical.

6. Dispositif selon une des revendications précédentes, sur lequel le mécanisme de positionnement par poussée (7) comporte, sur une arête supérieure dirigée vers la pile (3), un rouleau (17).

7. Dispositif selon une des revendications précédentes, sur lequel le mécanisme de positionnement par poussée (7) est entraîné par un vérin pneumatique (8), muni d'un palier de stabilisation additionnel (18) dans la deuxième direction latérale.

8. Dispositif selon une des revendications précédentes, conçu pour empiler les panneaux (2) par couches individuelles.

9. Dispositif selon une des revendications précédentes, sur lequel le mécanisme de positionnement (7 - 9) est conçu pour positionner simultanément plusieurs couches sur la pile (3).

10. Dispositif selon une des revendications précédentes, avec un deuxième mécanisme de positionnement (4 - 6) pour le positionnement des panneaux (2) disposés les uns sur les autres dans la pile (3), ledit mécanisme de positionnement (4 - 6) comportant un deuxième mécanisme de positionnement par poussée (5), lequel est d'une part conçu pour pousser les panneaux (2) à positionner à partir de la première direction latérale et les déplacer à des fins de positionnement et d'autre part disposé en hauteur dans un sens vertical par rapport aux panneaux au niveau du panneau (2) en cours de dépose sur la pile, ledit mécanisme de positionnement par poussée (5) pouvant par ailleurs servir d'amortisseur pour les panneaux (2) déposés par l'installation de transport (1) sur la pile (2).

11. Dispositif pour l'empilage de panneaux (2) en une pile (3) au moyen du dispositif décrit ci-dessus en utilisant la procédure suivante :
transport de panneaux (2) à la pile (3) et dépose des panneaux (2) sur la pile (3) à partir d'une première direction latérale,
positionnement des panneaux disposés les uns sur les autres dans la pile (3) par poussée effectuée par le mécanisme de positionnement par poussée (7) sur les panneaux à positionner à partir de la deuxième direction latérale, perpendiculaire à la première direction latérale, ladite poussée effectuée par le mécanisme de positionnement par poussée (7) ayant pour effet de déplacer et par conséquent de positionner les panneaux, le mécanisme de positionnement par poussée (7) étant à cet effet disposé sous un panneau (2) en cours de dépose sur la pile.
